(19) 

Europäisches
Patentamt
European
Patent Office
Office européen
des brevets

(11) **EP 4 085 231 B1**

(12) **EUROPEAN PATENT SPECIFICATION**

(45) Date of publication and mention
of the grant of the patent:
**20.08.2025 Bulletin 2025/34**

(21) Application number: **19958252.9**

(22) Date of filing: **31.12.2019**

(51) International Patent Classification (IPC):
*G01P 21/00* *(2006.01)*      *G01P 15/18* *(2013.01)*

(52) Cooperative Patent Classification (CPC):
**G01P 21/00;** G01P 15/18

(86) International application number:
**PCT/CN2019/130364**

(87) International publication number:
**WO 2021/134415 (08.07.2021 Gazette 2021/27)**

(54) **METHOD AND APPARATUS FOR ZERO-G OFFSET CALIBRATION FOR A MEMS-BASED ACCELEROMETER**

VERFAHREN UND VORRICHTUNG ZUR NULL-G-OFFSETKALIBRIERUNG FÜR EINEN MEMS-BASIERTEN BESCHLEUNIGUNGSMESSER

PROCÉDÉ ET APPAREIL D'ÉTALONNAGE DE DÉCALAGE D'IMPESANTEUR POUR UN ACCÉLÉROMÈTRE DE TYPE MEMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.11.2022 Bulletin 2022/45**

(73) Proprietor: **Robert Bosch Power Tools GmbH 70771 Leinfelden-Echterdingen (DE)**

(72) Inventors:
• **CHEN, Shize**
**70771 Leinfelden- Echterdingen (DE)**

• **CHEN, Huabang**
**70771 Leinfelden- Echterdingen (DE)**
• **WANG, Wanru**
**70771 Leinfelden- Echterdingen (DE)**
• **NERAVATI, Sudhir Kumar**
**70771 Leinfelden- Echterdingen (DE)**
• **HUANG, Wenyan**
**70771 Leinfelden-Echterdingen (DE)**

(56) References cited:
CA-A1- 3 082 153      CN-A- 101 949 710
CN-A- 104 677 353     CN-A- 108 827 291
GB-A- 2 478 561       US-B1- 6 758 080
US-B1- 6 871 411

## Description

### TECHNICAL FIELD

The present application generally relates to Micro-Electro-Mechanical Systems (MEMS). More particularly, the present application relates to a method and an apparatus for zero-g offset calibration for a MEMS-based accelerometer. The present application also relates to computer program product adapted for the same purpose.

### BACKGROUND

Nowadays, systems incorporating MEMS sensors (e.g. accelerometers, gyroscopes, etc.) are used in more and more applications. Among the reasons for their wide use is the fact that they are cost-effective, have miniature size and consume low power.

There are many sources of error that affect the behavior of the MEMS sensors. One of the sources is sensor bias error, which is the difference between the ideal 0g output and the 0g output reported by the sensor. Think of a perfectly horizontal surface with an accelerometer sitting on it. If there was no bias error, then the sensor output would read the ideal 0g offset voltage on the x and y-axis, +1g output voltage on the z-axis. However, the sensor will read something different than the ideal output on a perfectly horizontal surface because of many factors including mechanical tolerances in the component parts (PCB, screws, standoffs, solder pads, etc.).

Calibrating accelerometers is mostly a factory test problem. Users purchasing accelerometers and assembling them into products can also have factory test issues in regards to accelerometer calibration. Because there can be assembly issues that result in accelerometers that are rotated or tilted relative to the desired position for the application, it may need to make re-zero the 0g offset or level the pitch and roll in their production line.

The MEMS accelerometers can be calibrated by using multiple calibration methods. However, the current methods are time-intensive and inconvenient for users. Therefore, calibration technique with less complexity and lower cost is desired in the field.

GB 2 478 561 A1 provides apparatus and methods for the calibration of a three axis vector field sensor that provides options for simpler and less expensive calibration of offset and gain for all three axes X,Y,Z. US 6,871,411 B1 provides an automatic calibration method for use in an electronic compass.

### SUMMARY

One of the objects is to provide methods and apparatus for zero-g offset calibration for a MEMS-based accelerometer, which allows a convenient and low-cost calibrating process for use.

According to one aspect of the present invention, a method for zero-g offset calibration for a measurement apparatus including a MEMS-based accelerometer is provided as defined by independent claim 1. The method comprises:

> a) receiving acceleration measurements performed during at least half of one complete revolution of the MEMS-based accelerometer, wherein the at least half of one complete revolution is accomplished by making the MEMS-based accelerometer rotate around a first axis not parallel to a gravity vector;
> b) from the accelerometer measurements, obtaining one or more pairs of acceleration peaks and acceleration valleys along a second axis perpendicular to the first axis; and
> c) determining a zero-g offset for the second axis on the basis of the one or more pairs of acceleration peaks and acceleration valleys.

the MEMS-based accelerometer is included in a horizontal collimator, and the method further comprises: emitting a reference beam using a laser when the measurement apparatus is in a proper position determined by the MEMS-based accelerometer, where the reference beam is parallel to a horizontal direction when used as the horizontal collimator.

Optionally, at step c), the zero-g offset for the second axis is determined as an average of the one or more pairs of acceleration peaks and acceleration valleys.

Optionally, the first axis is substantially perpendicular to the gravity vector.

Optionally, the MEMS-based accelerometer is a tri-axis accelerometer, the first axis is a Z-axis of a rectangular coordinate system established on the MEMS-based accelerometer and the second axis is an X-axis or a Y-axis of the rectangular coordinate system.

Optionally, the MEMS-based accelerometer is a dual-axis accelerometer, and the second axis is an X-axis or a Y-axis of a rectangular coordinate system established on the MEMS-based accelerometer.

Optionally, the method as described above further comprises: d) outputting a notification on whether the zero-g offset calibration is successfully done.

According to another aspect of the present invention, a measurement apparatus is provided as defined by independent claim 7. The apparatus comprises:

a horizontal collimator including a Micro-Electro-Mechanical-System(MEMS)-based accelerometer; a storage device configured to store a computer program comprising computer instructions; and
a processor coupled to the storage device and configured to execute the computer instructions to perform:

a) receiving acceleration measurements performed during at least half of one complete revolution of the MEMS-based accelerometer, wherein the at least half of one complete revolution is accomplished by making the MEMS-based accelerometer rotate around a first axis not parallel to a gravity vector;
b) from the accelerometer measurements, obtaining one or more pairs of acceleration peaks and acceleration valleys along a second axis perpendicular to the first axis; and
c) determining a zero-g offset for the second axis on the basis of the one or more pairs of acceleration peaks and acceleration valleys.

The measurement apparatus further comprises a laser adapted to emit a reference beam when the measurement apparatus is in a proper position determined by the MEMS-based accelerometer, where the reference beam is parallel to a horizontal direction when used as the horizontal collimator.

According to another aspect of the present invention, a computer program product for zero-g offset calibration for a Micro-Electro-Mechanical-System(MEMS)-based accelerometer is embodied in a computer readable storage medium and comprises computer instructions to cause the apparatus as described above to perform the method as described above.

## BRIEF DESCRIPTION OF THE DRAWINGS

The foregoing and other objects, features, and advantages would be apparent from the following more particular description of preferred embodiments as illustrated in the accompanying drawings in which:

Fig. 1 is a block diagram illustrating a measurement apparatus according to one exemplary embodiment of the present invention.
Fig. 2 illustrates an example describing acceleration readings of an accelerometer versus a rotational angle or orientation of the accelerometer.
Fig. 3 illustrates an exemplary curve representing a relationship between the acceleration in X axis or Y axis and the rotational angle.
Fig. 4 is a flow diagram illustrating a method for zero-g offset calibration for a MEMS-based accelerometer according to another exemplary embodiment of the present invention.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention as claimed. Unless stated otherwise, a component such as a processor or a memory described as being configured to perform a task may be implemented as a general component that is temporarily configured to perform the task at a given time or a specific component that is manufactured to perform the task. As used herein, the term "processor" refers to one or more devices, circuits, and/or processing cores configured to process data, such as computer program instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Also, use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

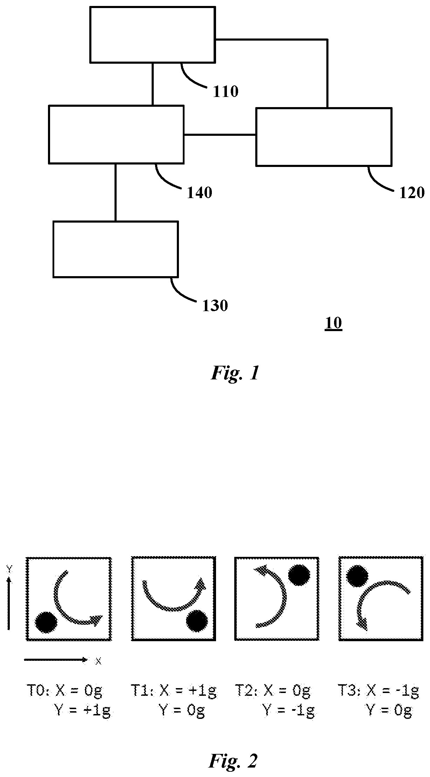

Fig. 1 is a block diagram illustrating a measurement apparatus according to one exemplary embodiment of the present invention. As an example, the measurement apparatus is a horizontal collimator or an instrument for measuring tilt angle.

With reference to Fig. 1, the measurement apparatus 10 comprises a MEMS-based accelerometer 110, a storage device 120, an output device 130 and a processor 140. As shown in Fig. 1, the processor 140 is coupled to the MEMS-based accelerometer 110, the storage device 120 and the output device 130, and the MEMS-based accelerometer 110 is coupled to the storage device 120.

The MEMS-based accelerometer 110 is configured to measure the accelerations or forces in two or three axes orthogonal to each other. In the context of this description, these axes are denoted as x, y, and Z axis in a rectangular coordinate system established on the MEMS-based accelerometer. When a force is applied to the apparatus or the accelerometer along one of the axes, the accelerometer 110 takes the value or reading of force and then converts it into the value of acceleration. This force is converted into acceleration by using Newton's Second Law. Because the mass of the object in the MEMS is known, the processor 130 can convert the force reading into an acceleration reading. If an acceleration reading is going in the same direction as the axis, then the accelerometer will output a positive value, and it will output a negative value if the acceleration is in the opposite direction of the axis.

This inertia force reading technique implies that the accelerometer will always read an acceleration value even if the apparatus is stationary. When the accelerometer is stationary, the accelerometer will read the acceleration value due to gravity. This means that if one axis is parallel to the direction of gravity, the acceleration read on that axis will be equal to $9.81 \text{ m/s}^2$. In the context of this description, all accelerations measured are with respect to g's or all accelerations are a fraction or multiple of g.

In the present embodiment, the MEMS-based accelerometer may be a tri-axis accelerometer or a dual-axis accelerometer.

The storage device 120 is configured to store the acceleration values measured by the accelerometer 110. The storage device 120 is further configured to store a computer program comprising computer instructions for calculating tilt angle and performing zero-g offset calibration for the accelerometer 110.

The output device 130 may comprise a display and/or a speaker and is configured to output the calculating result and the calibrating result made by the processor 140.

The processor 140 is configured to execute the computer instructions stored in the storage device 120 to calculate tilt angle and perform zero-g offset calibration for the accelerometer 110 based on the acceleration measurement carried out by the accelerometer 110. In particular, to calibrate zero-g offset along X axis and Y axis, the apparatus 10 or the MEMS-based accelerometer 110 is made to rotate around Z axis, which is set as one not parallel to a gravity vector, for at least half of one complete revolution. Optionally, Z axis is perpendicular to the gravity vector. In an illustrative example, an aperture or a hole is formed on the surface of the case of the apparatus 10, and thus the apparatus 10 may be installed on a wall by hanging the apparatus on a hook or nail, which is fixed to the wall, and thus is rotatable around the hook or nail, i.e., is rotatable around Z axis. At the beginning of a calibration procedure, one may provide an initial momentum to the apparatus 10, which, in turn, rotates around the hook or nail. The accelerometer 110 measures the accelerations in X axis and/or Y axis during the rotation. As noted above, these measured accelerations are stored in the storage device 120. For each of X axis and Y axis, there is a pair of acceleration peak and acceleration valley due to the gravity during half of one complete revolution.

Fig. 2 illustrates an example describing acceleration readings of an accelerometer versus a rotational angle or orientation of the accelerometer. As shown in Fig. 2, with the rotation of the accelerometer, the acceleration in Y axis has a maximum or peak, i.e., 1g, at T0 and has a minimum or valley, i.e., -1g, at T2; on the other hand, the acceleration in X axis has a maximum or peak, i.e., 1g, at T1 and has a minimum or valley, i.e., -1g, at T4, where T0, T1, T2 and T4 represent the orientation of the accelerometer.

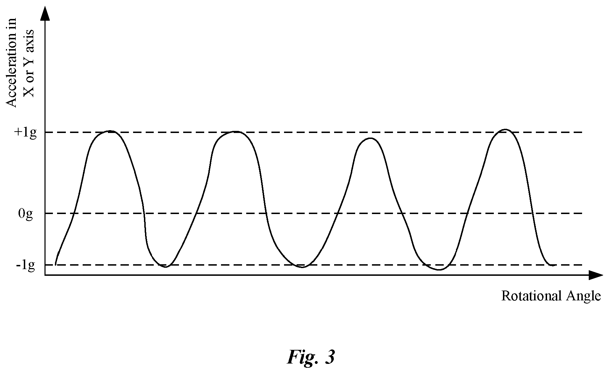

As noted above, the acceleration readings or values will change with the rotational angle of the apparatus during the rotation, and for each of X axis and Y axis, there is a pair of acceleration peak and acceleration valley during half of one complete revolution. If the rotation is made for one or more revolutions, several pairs of peaks and valleys may be observed. Fig. 3 illustrates an exemplary curve representing a relationship between the acceleration in X axis or Y axis and the rotational angle. As shown in Fig. 3, the number of the pairs of peaks and valleys will increase with the number of the revolutions.

The processor 140 is configured to retrieve in the acceleration measurement one or more pairs of acceleration peaks and acceleration valleys for each of X axis and Y axis and determine a zero-g offset for each of X axis and Y axis on the basis of the respective pairs of acceleration peaks and acceleration valleys. Optionally, the zero-g offset for X axis or Y axis may be determined as an average of the respective pairs of acceleration peaks and acceleration valleys. The processor 140 is further configured to output the calibration result or the zero-g offset to the storage device 120 and/or the output device 130. Optionally, the processor 140 is configured to output to the output device and/or the storage device 120 a notification on whether the zero-g offset calibration is successfully done.

When used as a horizontal collimator, the measurement apparatus may further comprise a motor for rotating the measurement apparatus and a laser for emitting a reference beam. The processor is configured to control the laser to emit the reference beam when the measurement apparatus is in a proper position where the reference beam is parallel to a particular direction, e.g., horizontal direction. Moreover, the processor is configured to control the rotation of the measurement apparatus by means of the motor based on the calibration result. Since the proper position is substantially determined by the MEMS-based accelerometer, it can provide a reliable and accurate collimating indicator.

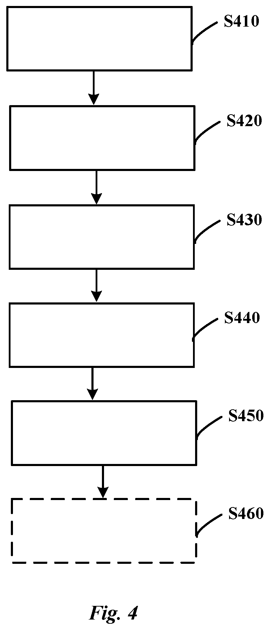

Fig. 4 is a flow diagram illustrating a method for zero-g offset calibration for a MEMS-based accelerometer according to another exemplary embodiment of the present invention.

For illustrative purpose, the following description is made with reference to the apparatus as shown in Fig. 1. However, one skilled artisan in the art would recognize that the present invention is not limited to any specific apparatus.

As shown in Fig. 4, at step S410, a set of acceleration values during the rotation of the measurement apparatus 10 for at least half of one complete revolution are measured by the accelerometer 110 and are stored in the storage device 120.

Then at step S420, the processor 140 receives the acceleration measurement, e.g., the set of acceleration values, from the accelerometer 110 or the storage device 120.

At step S430, the processor 140 retrieves in the acceleration measurement one or more pairs of acceleration peaks and acceleration valleys for each of X axis and Y axis.

Then, at step S440, the processor 140 determines a zero-g offset for each of X axis and Y axis on the basis of the respective one or more pairs of acceleration peaks and acceleration valleys. As noted above, the zero-g offset for X axis or Y axis may be determined as an average of their respective pairs of acceleration peaks and acceleration valleys. For example, the zero-g offset for X axis or Y axis may be calculated according to the following formulas:

$$ZG\_Offset_x = \frac{\sum_{i=1}^{m}(a_x^p(i)+a_x^v(i))}{m} \qquad (1)$$

$$ZG\_Offset_y = \frac{\sum_{j=1}^{n}(a_y^p(j)+a_y^v(j))}{n} \qquad (2)$$

where $ZG\_Offset_x$ and $ZG\_Offset_y$ represent the zero-g offsets for X axis and Y axis respectively, m represents the number of the pairs of acceleration peaks and acceleration valleys in X axis, n represents the number of the pairs of acceleration peaks and acceleration valleys in Y axis, $a_x^p(i)$ represents the acceleration peak in the ith pair of acceleration peaks and acceleration valleys in X axis, $a_x^v(i)$ represents the acceleration valley in the ith pair of acceleration peaks and acceleration valleys in X axis, $a_y^p(j)$ represents the acceleration peak in the jth pair of acceleration peaks and acceleration valleys in Y axis, and $a_y^v(j)$ represents the acceleration valley in the jth pair of acceleration peaks and acceleration valleys in Y axis.

At step S450, the processor 140 outputs the zero-g offsets determined at step S440 to the storage device 120 and/or the output device 130.

Optionally, at step S460, the processor 140 outputs to the output device 130 and/or the storage device 120 a notification on whether the zero-g offset calibration is successfully done.

It should be noted that the aforesaid embodiments are illustrative instead of restricting, substitute embodiments may be designed by those skilled in the art without departing from the scope of the claims enclosed. The wordings such as "include", "including", "comprise" and "comprising" do not exclude elements or steps which are present but not listed in the description and the claims. It also shall be noted that as used herein and in the appended claims, the singular forms "a", "an", and "the" include plural referents unless the context clearly dictates otherwise. Embodiments can be achieved by means of hardware including several different elements or by means of a suitably programmed computer. In the unit claims that list several means, several ones among these means can be specifically embodied in the same hardware item. The use of such words as first, second, third does not represent any order, which can be simply explained as names.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. The protection scope of the disclosure is defined by the accompanying claims.

**Claims**

1. A method for zero-g offset calibration for a measurement apparatus (10) including a Micro-Electro-Mechanical-System, MEMS,-based accelerometer (110), comprising:

   a) receiving (S420) acceleration measurements performed during at least half of one complete revolution of the MEMS-based accelerometer (110), wherein the at least half of one complete revolution is accomplished by making the MEMS-based accelerometer (110) rotate around a first axis not parallel to a gravity vector;
   b) from the accelerometer measurements, obtaining (S430) one or more pairs of acceleration peaks and acceleration valleys along a second axis perpendicular to the first axis; and
   c) determining (S440) a zero-g offset for the second axis on the basis of the one or more pairs of acceleration peaks and acceleration valleys,
   wherein the MEMS-based accelerometer (110) is included in a horizontal collimator, and
   further comprising: emitting a reference beam using a laser when the measurement apparatus (10) is in a proper position determined by the MEMS-based accelerometer, where the reference beam is parallel to a horizontal direction when used as the horizontal collimator.

2. The method according to claim 1, wherein at step c), the zero-g offset for the second axis is determined as an average of the one or more pairs of acceleration peaks and acceleration valleys.

3. The method according to claim 1, wherein the first axis is substantially perpendicular to the gravity vector.

4. The method according to claim 1, wherein the MEMS-based accelerometer (110) is a tri-axis accelerometer, the first axis is a Z-axis of a rectangular coordinate system established on the MEMS-based accelerometer and the second axis is an X-axis or a Y-axis of the rectangular coordinate system.

5. The method according to claim 1, wherein the MEMS-based accelerometer (110) is a dual-axis accelerometer, and the second axis is an X-axis or a Y-axis of a rectangular coordinate system established on the MEMS-based accelerometer (110).

6. The method according to claim 1, further comprising:
   d) outputting a notification on whether the zero-g offset calibration is successfully done.

7. A measurement apparatus (10), comprising:

   a horizontal collimator including
   a Micro-Electro-Mechanical-System, MEMS,-based accelerometer (110);
   a storage device (120) configured to store a computer program comprising computer instructions; and
   a processor (140) coupled to the storage device (120) and configured to execute the computer instructions to perform:

   a) receiving (S420) acceleration measurements performed during at least half of one complete revolution of the MEMS-based accelerometer (110), wherein the at least half of one complete revolution is accomplished by making the MEMS-based accelerometer rotate around a first axis not parallel to a gravity vector;

b) from the accelerometer measurements, obtaining (S430) one or more pairs of acceleration peaks and acceleration valleys along a second axis perpendicular to the first axis; and
c) determining (S440) a zero-g offset for the second axis on the basis of the one or more pairs of acceleration peaks and acceleration valleys,

wherein the measurement apparatus further comprises a laser adapted to emit a reference beam when the measurement apparatus (10) is in a proper position determined by the MEMS-based accelerometer, where the reference beam is parallel to a horizontal direction when used as the horizontal collimator.

8. The measurement apparatus (10) according to claim 7, wherein at step c), the zero-g offset for the second axis is determined as an average of the one or more pairs of acceleration peaks and acceleration valleys.

9. The measurement apparatus (10) according to claim 7, wherein the first axis is substantially perpendicular to the gravity vector.

10. The measurement apparatus (10) according to claim 7, wherein the MEMS-based accelerometer (110) is a tri-axis accelerometer, the first axis is a Z-axis of a rectangular coordinate system established on the MEMS-based accelerometer and the second axis is an X-axis or a Y-axis of the rectangular coordinate system.

11. The measurement apparatus (10) according to claim 7 wherein the MEMS-based accelerometer is a dual-axis accelerometer, and the second axis is an X-axis or a Y-axis of a rectangular coordinate system established on the MEMS-based accelerometer (110).

12. The measurement apparatus according to claim 7, the processor (140) is configured to execute the computer instructions to further perform:
d) outputting a notification on whether the zero-g offset calibration is successfully done.

13. A computer program product for zero-g offset calibration for a Micro-Electro-Mechanical-System, MEMS,-based accelerometer, the computer program product being embodied in a computer readable storage medium and comprising computer instructions to cause the apparatus according to any of claims 7 to 12 to perform the method according to anyone of claims 1-6.

## Patentansprüche

1. Verfahren zur Null-g-Offset-Kalibrierung für eine Messvorrichtung (10), die einen auf einem mikroelektromechanischen System, MEMS, basierenden Beschleunigungsmesser (110) enthält, umfassend:

a) Empfangen (S420) von Beschleunigungsmessungen, die während mindestens einer halben vollständigen Umdrehung des MEMS-basierten Beschleunigungsmessers (110) durchgeführt werden, wobei die mindestens halbe vollständige Umdrehung dadurch erreicht wird, dass der MEMS-basierte Beschleunigungsmesser (110) um eine erste Achse rotiert, die nicht parallel zu einem Schwerkraftvektor ist;
b) aus den Beschleunigungsmessungen Ermitteln (S430) von einem oder mehreren Paaren von Beschleunigungsspitzen und Beschleunigungstälern entlang einer zweiten Achse, die rechtwinklig zur ersten Achse ist; und
c) Bestimmen (S440) eines Null-g-Offsets für die zweite Achse auf Grundlage des einen oder der mehreren Paare von Beschleunigungsspitzen und Beschleunigungstälern,
wobei der MEMS-basierte Beschleunigungsmesser (110) in einem horizontalen Kollimator enthalten ist, und ferner umfassend: Aussenden eines Referenzstrahls mittels eines Lasers, wenn sich die Messvorrichtung (10) in einer durch den MEMS-basierten Beschleunigungsmesser bestimmten Sollposition befindet, wobei der Referenzstrahl bei Verwendung als horizontaler Kollimator parallel zu einer Horizontalrichtung ist.

2. Verfahren nach Anspruch 1, wobei in Schritt c) der Null-g-Offset für die zweite Achse als Mittelwert des einen oder der mehreren Paare von Beschleunigungsspitzen und Beschleunigungstälern bestimmt wird.

3. Verfahren nach Anspruch 1, wobei die erste Achse im Wesentlichen rechtwinklig zum Schwerkraftvektor ist.

4. Verfahren nach Anspruch 1, wobei der MEMS-basierte Beschleunigungsmesser (110) ein Drei-Achsen-Beschleunigungsmesser ist, die erste Achse eine Z-Achse eines auf dem MEMS-basierten Beschleunigungsmesser festgelegten rechtwinkligen Koordinatensystems ist und die zweite Achse eine X-Achse oder eine Y-Achse des rechtwinkligen Koordinatensystems ist.

5. Verfahren nach Anspruch 1, wobei der MEMS-basierte Beschleunigungsmesser (110) ein Zwei-Achsen-Beschleunigungsmesser ist und die zweite Achse eine X-Achse oder eine Y-Achse eines auf dem MEMS-basierten Beschleunigungsmesser (110) festgelegten rechtwinkligen Koordinatensystems ist.

6. Verfahren nach Anspruch 1, ferner umfassend:
d) Ausgeben einer Benachrichtigung darüber, ob die Null-g-Offset-Kalibrierung erfolgreich durchgeführt wurde.

7. Messvorrichtung (10), umfassend:

einen horizontalen Kollimator, der einen auf einem mikroelektromechanischen System, MEMS, basierenden Beschleunigungsmesser (110) umfasst;
eine Speichervorrichtung (120), die dazu ausgelegt ist, ein Computerprogramm mit Computeranweisungen zu speichern; und
einen Prozessor (140), der mit der Speichervorrichtung (120) gekoppelt ist und dazu ausgelegt ist, die Computeranweisungen auszuführen, um Folgendes durchzuführen:

a) Empfangen (S420) von Beschleunigungsmessungen, die während mindestens einer halben vollständigen Umdrehung des MEMS-basierten Beschleunigungsmessers (110) durchgeführt werden, wobei die mindestens halbe vollständige Umdrehung dadurch erreicht wird, dass der MEMS-basierte Beschleunigungsmesser um eine erste Achse rotiert, die nicht parallel zu einem Schwerkraftvektor ist;
b) aus den Beschleunigungsmessungen Ermitteln (S430) von einem oder mehreren Paaren von Beschleunigungsspitzen und Beschleunigungstälern entlang einer zweiten Achse, die rechtwinklig zur ersten Achse ist; und
c) Bestimmen (S440) eines Null-g-Offsets für die zweite Achse auf Grundlage des einen oder der mehreren Paare von Beschleunigungsspitzen und Beschleunigungstälern,

wobei die Messvorrichtung ferner einen Laser umfasst, der dazu ausgelegt ist, einen Referenzstrahl auszusenden, wenn sich die Messvorrichtung (10) in einer durch den MEMS-basierten Beschleunigungsmesser bestimmten Sollposition befindet, wobei der Referenzstrahl bei Verwendung als horizontaler Kollimator parallel zu einer Horizontalrichtung ist.

8. Messvorrichtung (10) nach Anspruch 7, wobei in Schritt c) der Null-g-Offset für die zweite Achse als Mittelwert des einen oder der mehreren Paare von Beschleunigungsspitzen und Beschleunigungstälern bestimmt wird.

9. Messvorrichtung (10) nach Anspruch 7, wobei die erste Achse im Wesentlichen rechtwinklig zum Schwerkraftvektor ist.

10. Messvorrichtung (10) nach Anspruch 7, wobei der MEMS-basierte Beschleunigungsmesser (110) ein Drei-Achsen-Beschleunigungsmesser ist, die erste Achse eine Z-Achse eines auf dem MEMS-basierten Beschleunigungsmesser festgelegten rechtwinkligen Koordinatensystems ist und die zweite Achse eine X-Achse oder eine Y-Achse des rechtwinkligen Koordinatensystems ist.

11. Messvorrichtung (10) nach Anspruch 7, wobei der MEMS-basierte Beschleunigungsmesser ein Zwei-Achsen-Beschleunigungsmesser ist und die zweite Achse eine X-Achse oder eine Y-Achse eines auf dem MEMS-basierten Beschleunigungsmesser (110) festgelegten rechtwinkligen Koordinatensystems ist.

12. Messvorrichtung nach Anspruch 7, wobei der Prozessor (140) dazu ausgelegt ist, die Computeranweisungen ferner auszuführen, um:
d) Ausgeben einer Benachrichtigung darüber, ob die Null-g-Offset-Kalibrierung erfolgreich durchgeführt wurde.

13. Computerprogrammprodukt zur Null-g-Offset-Kalibrierung für einen auf einem mikroelektromechanischen System, MEMS, basierenden Beschleunigungsmesser, wobei das Computerprogrammprodukt auf einem computerlesbaren Speichermedium verkörpert ist und Computeranweisungen umfasst, um die Vorrichtung nach einem der Ansprüche 7 bis 12 dazu zu veranlassen, das Verfahren nach einem der Ansprüche 1 bis 6 auszuführen.

**Revendications**

1. Procédé d'étalonnage de décalage d'impesanteur pour un appareil de mesure (10) comprenant un accéléromètre de type microsystème électromécanique, MEMS (110), comprenant :

   a) la réception (S420) de mesures d'accélération effectuées pendant au moins une moitié d'un tour complet de l'accéléromètre de type MEMS (110), dans lequel l'au moins une moitié d'un tour complet est accomplie en faisant tourner l'accéléromètre de type MEMS (110) autour d'un premier axe non parallèle à un vecteur de pesanteur ;
   b) à partir des mesures de l'accéléromètre, l'obtention (S430) d'une ou plusieurs paires de pics d'accélération et de creux d'accélération le long d'un second axe perpendiculaire au premier axe ; et
   c) la détermination (S440) d'un décalage d'impesanteur pour le second axe sur la base de la ou des paires de pics d'accélération et de creux d'accélération,
   dans lequel l'accéléromètre de type MEMS (110) est inclus dans un collimateur horizontal, et
   comprenant en outre : l'émission d'un faisceau de référence au moyen d'un laser lorsque l'appareil de mesure (10) est dans une position appropriée déterminée par l'accéléromètre de type MEMS, le faisceau de référence étant parallèle à une direction horizontale lorsqu'il est utilisé en tant que collimateur horizontal.

2. Procédé selon la revendication 1, dans lequel à l'étape c), le décalage d'impesanteur pour le second axe est déterminé en tant que moyenne de la ou des paires de pics d'accélération et de creux d'accélération.

3. Procédé selon la revendication 1, dans lequel le premier axe est sensiblement perpendiculaire au vecteur de pesanteur.

4. Procédé selon la revendication 1, dans lequel l'accéléromètre de type MEMS (110) est un accéléromètre à trois axes, le premier axe est un axe Z d'un système de coordonnées cartésiennes établi sur l'accéléromètre de type MEMS et le deuxième axe est un axe X ou un axe Y du système de coordonnées cartésiennes.

5. Procédé selon la revendication 1, dans lequel l'accéléromètre de type MEMS (110) est un accéléromètre à deux axes, et le second axe est un axe X ou un axe Y d'un système de coordonnées cartésiennes établi sur l'accéléromètre de type MEMS (110).

6. Procédé selon la revendication 1, comprenant en outre :
   d) l'émission d'une notification indiquant si l'étalonnage de décalage d'impesanteur a réussi.

7. Appareil de mesure (10), comprenant :

   un collimateur horizontal comprenant un accéléromètre de type microsystème électromécanique, MEMS (110) ;
   un dispositif de stockage (120) configuré pour stocker un programme informatique comprenant des instructions informatiques ; et
   un processeur (140) couplé au dispositif de stockage (120) et configuré pour exécuter les instructions informatique pour effectuer :

   a) la réception (S420) de mesures d'accélération effectuées pendant au moins une moitié d'un tour complet de l'accéléromètre de type MEMS (110), dans lequel l'au moins une moitié d'un tour complet est accomplie en faisant tourner l'accéléromètre de type MEMS autour d'un premier axe non parallèle à un vecteur de pesanteur ;
   b) à partir des mesures de l'accéléromètre, l'obtention (S430) d'une ou plusieurs paires de pics d'accélération et de creux d'accélération le long d'un second axe perpendiculaire au premier axe ; et
   c) la détermination (S440) d'un décalage d'impesanteur pour le second axe sur la base de la ou des paires de pics d'accélération et de creux d'accélération,

   dans lequel l'appareil de mesure comprend en outre un laser conçu pour émettre un faisceau de référence lorsque l'appareil de mesure (10) est dans une position appropriée déterminée par l'accéléromètre de type MEMS, le faisceau de référence étant parallèle à une direction horizontale lorsqu'il est utilisé en tant que collimateur horizontal.

8. Appareil de mesure (10) selon la revendication 7, dans lequel à l'étape c), le décalage d'impesanteur pour le second axe est déterminé en tant que moyenne de la ou des paires de pics d'accélération et de creux d'accélération.

9. Appareil de mesure (10) selon la revendication 7, dans lequel le premier axe est sensiblement perpendiculaire au vecteur de pesanteur.

10. Appareil de mesure (10) selon la revendication 7, dans lequel l'accéléromètre de type MEMS (110) est un accéléromètre à trois axes, le premier axe est un axe Z d'un système de coordonnées cartésiennes établi sur l'accéléromètre de type MEMS et le deuxième axe est un axe X ou un axe Y du système de coordonnées cartésiennes.

11. Appareil de mesure (10) selon la revendication 7, dans lequel l'accéléromètre de type MEMS est un accéléromètre à deux axes, et le second axe est un axe X ou un axe Y d'un système de coordonnées cartésiennes établi sur l'accéléromètre de type MEMS (110).

12. Appareil de mesure selon la revendication 7, dans lequel le processeur (140) est configuré pour exécuter les instructions informatiques pour effectuer en outre : d) l'émission d'une notification indiquant si l'étalonnage de décalage d'impesanteur a réussi.

13. Produit programme informatique pour un étalonnage de décalage d'impesanteur pour un accéléromètre de type microsystème électromécanique, MEMS, le produit programme informatique étant incorporé dans un support de stockage lisible par ordinateur et comprenant des instructions informatiques pour amener l'appareil selon l'une quelconque des revendications 7 à 12 à exécuter le procédé selon l'une quelconque des revendications 1 à 6.

110

140

120

130

10

*Fig. 1*

Y

X

T0: X = 0g
Y = +1g

T1: X = +1g
Y = 0g

T2: X = 0g
Y = -1g

T3: X = -1g
Y = 0g

*Fig. 2*

*Fig. 3*

*Fig. 4*

**REFERENCES CITED IN THE DESCRIPTION**

**Patent documents cited in the description**

- GB 2478561 A1

- US 6871411 B1